Europäisches Patentamt
European Patent Office
Office européen des brevets

(11) Publication number: **0 287 669 A1**

(12) # EUROPEAN PATENT APPLICATION

published in accordance with Art. 158(3) EPC

(21) Application number: 87906461.6

(22) Date of filing: 02.10.87

Data of the international application taken as a basis:

(86) International application number: PCT/JP87/00736

(87) International publication number: WO88/02385 (07.04.88 88/08)

(51) Int. Cl.³: C 08 G 65/26, C 08 G 18/48, C 08 G 59/14

(30) Priority: 02.10.86 JP 233209/86

(43) Date of publication of application: 26.10.88 Bulletin 88/43

(84) Designated Contracting States: BE DE FR GB IT NL

(71) Applicant: MITSUI PETROCHEMICAL INDUSTRIES, LTD.
2-5, Kasumigaseki 3-chome Chiyoda-ku
Tokyo 100(JP)

(72) Inventor: YAMAMOTO, Yozo
4-1, Yushudai Nishi 2-chome
Ichihara-shi Chiba-ken 299-01(JP)

(72) Inventor: ISHIWATA, Shuichi
12-14, Aobadai 5-chome
Ichihara-shi Chiba-ken 299-01(JP)

(74) Representative: Cresswell, Thomas Anthony et al,
J.A. Kemp & Co. 14 South Square Gray's Inn
London WC1R 5EU(GB)

(54) **POLYOL RESIN AND PAINT COMPOSITION COMPRISING SAME.**

(57) The polyol resin comprises a reaction product between (a) disphenol epoxy resin containing a long-chain alkyl-substituted bisphenol as at least a part of the bisphenol component and (b) an active hydrogen-containing compound capable of reacting with the epoxy group, and is characterized in that it is soluble in organic solvents such as aromatic compounds and insensitive to humidity. This polyol resin is particularly useful as a resin component for urethane paint.

EP 0 287 669 A1

# DESCRIPTION

## Title of the Invention

POLYOL RESIN AND COATING COMPOSITION COMPRISING SAME

## Technical Field

The present invention relates to a polyol resin and a coating composition comprising this resin. More particularly, the present invention relates to an improvement in a polyol compound composed of a reaction product between a bisphenol type epoxy resin and an active hydrogen-containing compound having a reactivity with an epoxy group.

## Prior Art

A so-called bisphenol type epoxy resin prepared from bisphenol and epichlorohydrin (ECH) or β-methylepichlorohydrin is used in various fields where curing is effected by utilizing the reactivity of an epoxy group. Separately, a modified epoxy resin obtained by ring-opening an epoxy group by an active hydrogen-containing compound is used for improving adhesion and corrosion resistance in a coating composition comprising an epoxy resin, a melamine resin, a phenolic resin, an alkyd resin, a urethane resin or the like by utilizing the hydroxyl group in the resin.

In this case, the coating characteristics of the final coating composition are greatly influenced by the chemical structure and characteristics of the modified epoxy resin. For example, in case of an urethane type coating composition, an isocyanate as the curing agent reacts with water contained in ingredients of the coating composition such as the modified epoxy resin, and as the result, bubbling is caused in the coating layer and formed bubbles have bad influences on the performances of the coating such as the corrosion resistance.

It is known that this bubbling can be controlled if a high-molecular-weight resin is used as the starting resin or an active hydrogen-containing compound having a primary hydroxyl group rich in the reactivity with an isocyanate group is used as the modifier to introduce a hydroxyl group having a high reactivity into the resin. However, this modified resin involves a new problem in that the compatibility of the modified resin with an aromatic compound customarily used as the solvent for a coating composition, such as toluene or xylene, is drastically reduced.

Summary of the Invention

The present invention relates to an improvement in a polyol resin obtained by reaction of a bisphenol type epoxy resin with an active hydrogen-containing compound having a reactivity with an epoxy group. Namely, it is a primary object of the present invention to provide a polyol resin having an excellent solubility in an aromatic solvent and the like while it has a sufficient molecular weight and a high hydroxyl group concentration.

Another object of the present invention is to provide a polyol resin which hardly bubbles when combined with a polyisocyanate crosslinking agent, has an excellent solubility in solvents and gives excellent coating characteristics when used for a urethane type coating composition, and a urethane type coating composition comprising this polyol resin.

In accordance with the present invention, there is provided a polyol resin substantially free of an epoxy group, which comprises a reaction product between (a) a bisphenol type epoxy resin containing, as at least a part of the bisphenol component, an alkyl-substituted phenol represented by the following formula:

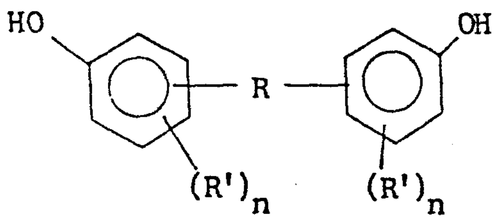

(I)

wherein R is a group $-CH_2-$, $-CHCH_3-$, $-C(CH_3)_2-$, 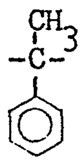 or 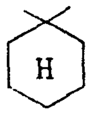 , R' stands for an alkyl group having at least 4 carbon atoms, preferably at least 6 carbon atoms, especially preferably 6 to 20 carbon atoms, and n is a number of 1 or 2.

and (b) an active hydrogen-containing compound having a reactivity with an epoxy group.

Furthermore, in accordance with the present invention, there is provided a urethane type coating composition comprising (A) the above-mentioned polyol resin, (B) a polyisocyanate or blocked polyisocyanate and (C) an organic solvent comprising an aromatic hydrocarbon.

The present invention is based on the finding that a polyol resin free of an epoxy resin, which is formed by reacting a bisphenol type epoxy resin containing as the bisphenol component a bisphenol having a long-chain alkyl group, that is, an alkyl group having at least 6 carbon atoms, especially at least 8 carbon atoms, bonded to the aromatic nucleus with an active hydrogen-containing organic compound having a reactivity with an epoxy group, such as an alkanolamine or phenol, is easily soluble in an organic solvent such as an aromatic compound solvent while the polyol resin has sufficiently high molecular weight and hydroxyl group concentration.

Moreover, the present invention is based on the

finding that if this polyol resin is used as a resin component of a urethane type coating composition, bubbling is controlled and a good curing or crosslinking property is obtained, and excellent coating properties can be obtained.

## Preferred Embodiments of the Invention

### Bisphenol Type Epoxy Resin

The bisphenol type epoxy resin used in the present invention is prepared by using, as at least a part of the bisphenol component, a long-chain alkyl-substituted bisphenol represented by the formula (I) in the known process for the preparation of a bisphenol type epoxy resin. As the long-chain alkyl group R' in the formula (I), there can be mentioned, for example, an octyl group, a nonyl group, a decyl group, a dodecyl group, a hexadecyl group and an octadecyl group. If the carbon number of this alkyl group R' is smaller than 6, the solubility of the final polyol resin in an aromatic organic solvent tends to decrease or the polyol resin is likely to contain water therein.

In the present invention, the bisphenol type epoxy resin may comprise a long-chain alkyl-substituted bisphenol as all of the bisphenol component or may comprise a long-chain alkyl-substituted bisphenol as a part of the bisphenol component and other bisphenol as the remaining bisphenol component. As the other bisphenol, there can be mentioned bisphenols of the general formula (I) which do not possess any substituent R', such as bisphenol A, bisphenol B and bisphenol F. In view of the solubility and moisture-absorbing property, it is preferred that the ratio of the long-chain alkyl-substituted bisphenol to the total bisphenol component in the epoxy resin be at least 20 mole%, especially at least 30 mole%.

The following methods can be adopted for obtaining

bisphenol type epoxy resins from the above-mentioned bisphenols.

(Reaction Example 1)

A bisphenol as mentioned above is reacted with epichlorohydrin or β-methylepichlorohydrin. The molecular weight of the epoxy resin can be adjusted by appropriately selecting the charge ratio between the bisphenol and epichlorohydrin. In general, a higher epichlorohydrin/bisphenol ratio gives an epoxy resin having a lower molecular weight.

The molecular weight can be increased by subjecting the so-obtained epoxy resin to polyaddition reaction with a bisphenol.

(Reaction Example 2)

The epoxy resin obtained by the above-mentioned Reaction Example 1 is subjected to polyaddition reaction with other dihydric phenol.

(Reaction Example 3)

A bisphenol as mentioned above is subjected to polyaddition reaction with a known epoxy resin.

The bisphenol type epoxy resin used in the present invention is an epoxy resin represented by the following formula:

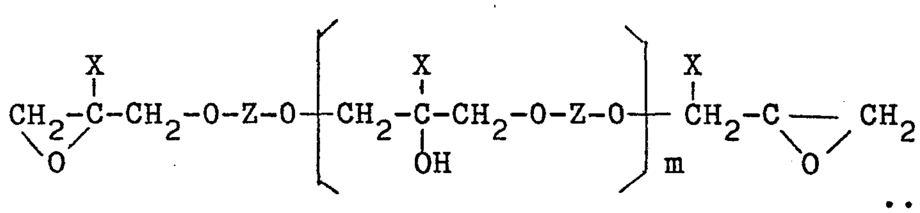

... (II)

wherein X stands for a hydrogen atom or a methyl group, Z stands for (i) a group represented by the following formula:

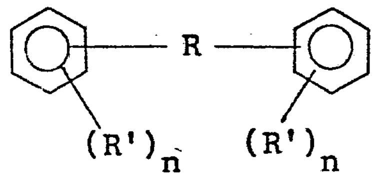

(III)

wherein R stands for a group $-CH_2-$, $-CHCH_3$,

$-C(CH_3)_2-$, 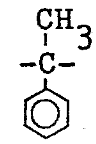 or 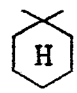 , R' stands for an alkyl group having at least 4 carbon atoms, preferably at least 6 carbon atoms, especially preferably at least 8 carbon atoms, and n is a number of 1 or 2, or (ii) a combination of a group represented by the above-mentioned formula (III) and a group represented by the following formula:

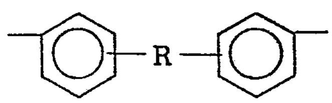

(IV)

wherein R is as defined above, and m is an epoxy equivalent-representing integer of from 0 to 15.

The long-chain alkyl-substituted bisphenol can be obtained by reacting a phenol derivative represented by the following formula:

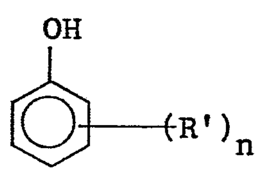

(V)

with an aldehyde or ketone such as formaldehyde, acetaldehyde, acetone, acetophenone, cyclohexanone or benzophenone.

Polyol Resin

As the active hydrogen-containing compound (b) to be reacted with the so-obtained bisphenol type epoxy resin, there can be used, for example, alkanolamines having 2 to 20 carbon atoms, such as diethanolamine,

diisopropanolamine, bis(2-hydroxybutyl)amine, bis(2-hydroxyoctyl)amine, N-methylethanolamine, N-methyl-isopropanolamine, N-ethylethanolamine and N-benzylethanolamine, phenols having 6 to 30 carbon atoms, especially alkylphenols, such as phenol, cresol, isopropylphenol, isobutylphenol, nonylphenol, xylenol, di-s-butylphenol and di-t-butylphenol, secondary amines having 4 to 20 carbon atoms, such as diethylamine, dibutylamine and N-methylaniline, monocarboxylic acids having 3 to 30 carbon atoms, such as acetic acid, stearic acid, undecylic acid, benzoic acid and toluic acid, and alcohols having 1 to 30 carbon atoms, such as methanol, propanol, butanol, octanol, ethylene glycol, propylene glycol, 4-butane-diol and 1,3-hexane-diol.

The components (a) and (b) are used in such amounts that the equivalent ratio of the active hydrogen of the component (b) to the epoxy group in the component (a) is from 0.95 to 1.05, preferably from 0.98 to 1.00. If necessary, the reaction may be carried out while extending the chain by making a bisphenol and/or a primary amine present in the reaction.

The reaction is generally conducted in the presence of a catalyst in the presence or absence of a solvent at about 50 to about 250°C, preferably about 100 to about 200°C. If the reaction temperature is too low, the reaction speed is lowered and if the reaction temperature is too high, reaction between the epoxy group and hydroxyl group or ring-opening reaction of the epoxy groups is caused at the stage of formation of the modified epoxy resin and there is a risk of gelation of the reaction product.

As the catalyst, there can be used, for example, alkali metal hydroxides such as sodium hydroxide and lithium hydroxide, alkali metal alcoholates such as sodium methylate, tertiary amines such as

dimethylbenzylamine, triethylamine and pyridine, quaternary ammonium salts such as tetramethyl ammonium chloride and benzyltrimethyl ammonium chloride, organic phosphorus compounds such as triphenylphosphine and triethylphosphine, quaternary phosphonium salts such as triphenylphosphine/methyl iodide adduct, alkali metal salts such as sodium carbonate and lithium chloride, Lewis acids such as boron trifluoride, aluminum trichloride and tin tetrachloride, and complexes such as boron trifluoride/diethyl ether adduct. In general, the catalyst is used in an amount of about 0.01 to about 10000 ppm, preferably about 0.1 to about 1000 ppm, based on the component (a). The alkanolamine in the component (b) can be used as the catalyst. In this case, there can be adopted a method in which at first, the catalytic amount of the alkanolamine is used for reaction with other active hydrogen-containing compound and then, the remaining alkanolamine is added and reacted.

When the reaction is carried out in a solvent, there can be used solvents free of an active hydrogen atom, for example, hydrocarbons such as toluene and xylene, and ketones such as methylisobutylketone, methylethylketone and cyclohexanone.

The polyol resin obtained according to the present invention is substantially free of an epoxy group because of the reaction with the above-mentioned active hydrogen-containing compound, and the hydroxyl value is generally about 50 to about 1000 mg-KOH/g. The number average molecular weight differs according to the degree of extension of the chain but in general, the number average molecular weight is in the range of from about 500 to about 6000.

Uses

The so-obtained polyol resin can be used as a baking paint in combination with a melamine resin, an

amino resin represented by a urea resin or a resin having a methylol group, such as a resol resin, or as a normal temperature-drying or baking resin in combination with an isocyanate or a masked (blocked) isocyanate.

The polyol resin is especially valuable as the resin component of a urethane paint. In this case, as the polyisocyanate, there can be used tolylene diisocyanate, 3,3'-bitolylene-4,4'-diisocyanate, diphenylmethane-4,4'-diisocyanate, methaphenylene-diisocyanate, naphthalene-diisocyanate and hexamethylene-diisocyanate singly or in combination. Furthermore, in case of a one-pack paint, there can be used a blocked isocyanate masked (or blocked) with a phenol, a malonic acid ester, an acetoacetic acid ester or acetyl-acetone.

Furthermore, the polyol resin can be used as a modifier for other polyol resins such as polyester polyols and acryl polyols, polyethers such as polyethylene glycol and polypropylene glycol, polyester resins, acrylic resins and cellulose resins.

When the polyol resin of the present invention is applied to the foregoing uses, if desired, there may incorporated inorganic and organic fillers and pigments such as calcium carbonate, silica, carbon, white tars represented by a petroleum resin, a vinyl compound polymer, tar and asphalt.

The polyol resin of the present invention has the following effects.

(a) The compatibility with an aromatic compound solvent is improved.

(b) Bubbling can be effectively prevented, and the coating-forming property is improved.

(c) The compatibility with organic paint fillers, that is, so-called white tars, for example, a petroleum resin, an oligomer of a styrene type compound such as

styrene or α-methylstyrene, a hydrocarbon monomer-based oligomer such as a xylene resin, a ketone resin and a coumarone resin, can be improved, though conventional polyol resins derived from epoxy resins are poor in the compatibility with these white tars.

(d) When the polyol resin of the present invention is used for coating, there can be formed a coating layer which is excellent in corrosion resistance, chemical resistance, adhesion to a substrate, abrasion resistance and plasticity.

(e) Even if an epoxy resin having a relatively low molecular weight is used as the starting material, bubbling can be controlled when the polyol resin is used for a urethane type coating composition, and therefore, there can be attained effects of reducing the viscosity of a solvent type paint and increasing the solid content.

Example 1

[Synthesis of bis(nonylhydroxyphenyl)methane]

A 3-liter round-bottom flask equipped with a stirrer, a thermometer and a cooling tube was charged with 1542 g of nonylphenol, 65.8 g of a 40% aqueous solution of formaldehyde and 1.54 mℓ of concentrated hydrochloric acid, and reaction was carried out under reflux for 5 hours.

Then, the reaction liquid was distilled at 140°C under 3 Torr to remove unreacted formaldehyde and nonylphenol, and the residue was subjected to molecular distillation at 125°C under 50 mTorr to separate nonylphenol and obtain bis(hydroxynonylphenyl)methane hereinafter referred to as "bis(nonylphenol)F" .

This bis(nonylphenol) F contained 85% of the phenol having the nonyl group at the p-position.

Synthesis of epoxy resin

Then, 199 g of the so-obtained bis(nonylphenol) was

dissolved with stirring in 326 g of epichlorohydrin (hereinafter referred to as "ECH"), and the temperature of the reaction system was elevated to 70°C. Then, a 48% aqueous solution of NaOH was added at 70°C to the reaction mixture dividedly in three times, that is, at the time of the start of the reaction, after passage of 0.5 hour from the start of the reaction and after passage of 1.0 hour from the start of the reaction. The amount of NaOH added each time was 0.36 mole per mole of bis(nonylphenol) F. After the addition of the NaOH aqueous solution at the third time, the mixture was further stirred at 70°C for 30 minutes.

The pressure in the reaction system was adjusted within the range of from 150 mmHg to 250 mmHg, and 66.7 g of a 48% aqueous solution of NaOH was continuously added to the reaction mixture at 70°C over a period of 2 hours. Water formed by the reaction during this period and water from the aqueous solution of NaOH were separated by reflux of the water-ECH azeotropic mixture and continuously removed from the reaction system. The distilled ECH was returned to the reaction system. After the addition of the aqueous solution of NaOH, the mixture was further stirred at 70°C for 30 minutes. The residual ECH was removed by distillation, and the product was heated at 125°C under 10 mmHg for 30 minutes.

Then, 148 g of water and 249 g of methylisobutylketone were added to the mixture of the formed resin and sodium chloride, and the mixture was stirred at a temperature of about 90°C for 30 minutes.

After the reaction mixture had been allowed to stand still, the lower layer of the aqueous solution of sodium chloride was removed, and the layer of the methylisobutylketone solution of the resin was neutralized with phosphoric acid and the water layer was

separated. Water contained in the methylisobutylketone solution of the resin was removed by azeotropic dehydration, and the precipitated salt was removed by G-4 glass filter. Finally, methylisobutylketone was removed in vacuum, and the formed resin was further heated at 150°C under 5 mmHg for 30 minutes to obtain a liquid epoxy resin.

The epoxy equivalent of this liquid epoxy resin was 365 g/equivalent.

(Synthesis of polyol resin)

A separable flask having a capacity of 2 liters, which was equipped with a stirrer, a thermometer and a cooling tube, was charged with 726 g of the so-obtained epoxy resin and 317 g of bis(nonylphenol) F, and the atmosphere in the flask was substituted with $N_2$ gas. Then, the temperature was elevated in an oil bath and 0.16 g of N,N-dimethylamine was added, and reaction was carried out at a temperature of 170°C until the epoxy equivalent became 1750.

Then, 63 g of diethanolamine was gradually dropped to the reaction mixture from a dropping funnel, and reaction was conducted until the epoxy resin of the reaction mixture became at least 20000. After termination of the reaction, the reaction mixture was diluted with an equal weight mixed solvent of methylisobutylketone and toluene so that the non-vontal component content was about 60% by weight.

The hydroxyl value of the obtained resin per se was 180 mg-KOH/g, the non-volatile component content in the resin solution was 60.3% and the toluene tolerance (the weight of toluene added for arriving at the turbidity point when toluene was added to 100 g of the resin solution at 25°C) was indefinite.

A white tar urethane paint was prepared from the so-obtained polyol resin in the following manner, and

various properties were evaluated.

(Preparation of white tar solution)

A xylene/formaldehyde condensate (average molecular weight = 400, viscosity = 750 cps/50°C) was used as the white tar component and a white tar solution was prepared by diluting the condensate with a xylene/cyclohexane mixed solvent (9/1 weight ratio) so that the resin content was 60% by weight.

(Preparation of paint)

Main ingredient:

The main ingredient was prepared by mixing 100 parts of the above-mentioned polyol resin solution, 130 parts of the white tar solution, 100 parts by weight of talc (talc imported through Asada Seifun), 16 parts of titanium white (Taibake R-820 supplied by Ishihara Sangyo) and 1 part of a thixotropic agent (Aerosil #300 supplied by Nippon Aerosil) by a sand mill.

Curing agent:

A toluene diisocyanate curing agent (Takenate D-102 supplied by Takeda Yakuhin Kogyo) was used.

Main ingredient/curing agent mixing ratio:

The main ingredient and curing agent were mixed so that the mole ratio NCO/OH of the isocyanate group in the curing agent to the hydroxyl group in the main ingredient was 0.8.

(Evaluation of paint)

Drying property

The formed coating composition was coated on a polished soft steel sheet (SS41) having a thickness of 0.3 mm, and the time at which a needle was not allowed to intrude into a wet coating layer having a thickness of 50 μm at 20°C was measured as the semi-curing time by using a Gardner type drying time measuring device (supplied by Uejima Seisakusho).

Pencil hardness

The pencil hardness of the test piece used at the drying test was measured at 20°C according to JIS K-5400.

Bubbling state

The coating composition was cured at 20°C in a polyethylene cup and the cured product having a thickness of about 4 cm was cut in the thickness direction, and the bubbling state in the cured product was examined.

Impact resistance

A soft steel sheet (SS41) having a thickness of 2 mm was degreased and sandblasted (SG#100), and the coating composition was coated to obtain a test sheet having a coating having a dry thickness of about 200 µm. The test sheet was aged at 20°C for 1 month, and the impact test was carried out according to JIS K-5400 by using a Du Pont type impact tester (impactor diameter = 1/2 inch, load = 500 g, test temperature = 20°C).

Bending resistance

A test piece having a coating layer having a dry thickness of 50 µm was prepared according to JIS K-5400. The test piece was aged at 20°C for 1 month and the test was carried out by using a core rod having a diameter of 4 mm. When cracking or peeling was not caused in the coating, the sample was judged as "qualifying" (the test temperature was 20°C).

Chemical resistance

A soft steel sheet was degreased and the four corners and peripheral edges were rounded by a file, and the steel sheet was sandblasted (SG#100). The obtained soft steel sheet (SS41) was coated with the coating composition according to JIS K-5400 to form a test piece having a coating layer having a dry thickness of about 200 µm (the corners and edges of the test piece were thickly coated so that the thickness was not

reduced on these corners or edges).

The test piece was aged at 20°C for 1 week and dipped in the following testing solution so that 1/2 of the height of the test piece was immersed in the testing solution.

If no blister was formed for 7 days under the above conditions, the sample was judged as "qualifying".

Composition of testing solution:

| | |
|---|---|
| Distilled water | 1000 mℓ |
| Sodium chloride | 50 g |
| Acetic acid | 10 mℓ |
| 30% $H_2O_2$ | 5 g |

The obtained results are shown in Table 1.

Example 2

Synthesis of a polyol resin and preparation of a paint were carried out in the same manner as described in Example 1 except that 160 g of bisphenol A was used instead of the bis(nonylphenol) F used in Example 1 for the synthesis of the polyol resin.

The obtained results are shown in Table 1.

Example 3

Synthesis of a polyol resin and preparation of a paint were carried out in the same manner as described in Example 1 except that 605 g of a bisphenol A type epoxy resin having an epoxy equivalent of 189 was used instead of 726 g of the epoxy resin used in Example 1 and the amounts used of bis(nonylphenol) F and diethanolamine were changed to 530 g and 91 g, respectively.

The obtained results are shown in Table 1.

Example 4

Synthesis of a polyol resin and preparation of a paint were carried out in the same manner as described in Example 3 except that 64 g of N-methylethanolamine was used instead of 63 g of diethanolamine used in

Example 3.

The obtained results are shown in Table 1.

Example 5

Synthesis of a polyol resin and preparation of a paint were carried out in the same manner as described in Example 3 except that 118 g of p-isopylphenol was used instead of 91 g of diethanolamine used in Example 3.

The obtained results are shown in Table 1.

Example 6

Synthesis of an polyol resin and preparation of a paint were carried out in the same manner as described in Example 3 except that N,N-dimethylbenzylamine was not added and the reaction was conducted while gradually adding 91 g of diethanolamine dropwise until the epoxy equivalent of the reaction mixture was at least 2000.

The obtained results are shown in Table 1.

Example 7

[Synthesis of bis(hydroxyoctylphenyl)methane]

Synthesis of a bisphenol was carried out in the same manner as described in Example 1 except that 1444 g of octylphenol was used instead of nonylphenol, whereby bis(hydroxyoctylphenyl)methane (hereinafter referred to as "bisoctylphenol F") was obtained.

[Synthesis of polyol resin]

Synthesis of a polyol resin was carried out in the same manner as described in Example 3 except that 497 g of the so-obtained bisoctylphenol F was used instead of 530 g of the bisnonylphenol F used in Example 3.

The obtained results are shown in Table 1.

Example 8

The procedures of Example 3 were repeated in the same manner except that 554 g of a bisphenol type epoxy resin having an epoxy equivalent of 1730, which was obtained from bisphenol AD, phenol, 1,1'-bis(4-hydroxyphenyl)ethane and acetaldehyde, was used instead of the bisphenol A type epoxy resin used in Example 3.

The obtained results are shown in Table 1.

Table 1

Properties of Paint and Coating

| | Solid content (wt%) | OH Value (mg-KOH/g) | Toluene Tolerance (g-toluene/100g-resin solution) | Drying time (hrs.) | Bubbling | Pencil Hard-ness (after 3 days) | Impact Resis-tance (cm) | Bending Resis-tance | Chemical Resistance |
|---|---|---|---|---|---|---|---|---|---|
| Exam-ple 1 | 60.3 | 180 | ∞ | 1.7 | cont-rolled | 6B ↓ | 40 | qualifying | qualifying |
| Exam-ple 2 | 60.5 | 210 | 1000 | 1.4 | " | 4B | 30 | " | " |
| Exam-ple 3 | 60.9 | 227 | 800 | 1.3 | " | 4B | 30 | " | " |
| Exam-ple 4 | 60.2 | 190 | 1500 | 1.8 | " | 5B | 30 | " | " |
| Exam-ple 5 | 60.1 | 143 | ∞ | 16 ↑ | " | 6B ↓ | 10 | " | " |
| Exam-ple 6 | 60.8 | 225 | 850 | 1.2 | " | 4B | 30 | " | " |
| Exam-ple 7 | 60.2 | 235 | 650 | 1.3 | " | 4B | 30 | " | " |
| Exam-ple 8 | 60.4 | 238 | 820 | 1.3 | " | 4B | 30 | " | " |

Comparative Example 1

The procedures of Example 3 were repeated in the same manner except that 267 g of bisphenol A was used instead of the bisnonylphenol F used in Example 3. The hydroxyl value of the obtained resin was 298 mg-KOH/g.

When the obtained resin was diluted with an equal weight mixed solvent of methylisobutylketone and toluene so that the non-volatile component content was about 60% by weight, the resin was not completely dissolved and a heterogeneous solution was formed.

Comparative Example 2

The procedures of Comparative Example 1 were repeated in the same manner except that 118 g of p-isopropylphenol was used instead of diethanolamine used in Comparative Example 1.

The hydroxyl value of the obtained resin was 194 mg-KOH/g, and the non-volatile component content in the resin solution was 59.6% by weight.

It was tried to prepare a coating composition by using the above-mentioned polyol resin composition in the same manner as described in Example 1. However, the phase separation was caused between the polyol resin and the white tar and formation of a coating composition was impossible.

WHAT IS CLAIMED IS

1. A polyol resin substantially free of an epoxy group, which comprises a reaction product between (a) a bisphenol type epoxy resin containing, as at least a part of the bisphenol component, an alkyl-substituted phenol represented by the following formula:

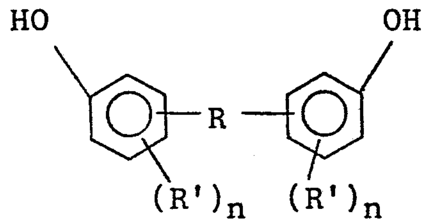

(I)

wherein R is a group $-CH_2-$, $-CHCH_3-$, $-C(CH_3)_2-$,

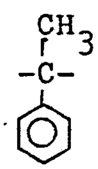 or 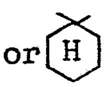, R' stands for an alkyl group having at least 4 carbon atoms, and n is a number of 1 or 2, and (b) an active hydrogen-containing compound having a reactivity with an epoxy group.

2. A polyol resin as set forth in claim 1, wherein the alkyl-substituted phenol occupies at least 20 mole% of the bisphenol component.

3. A polyol resin as set forth in claim 1, wherein the alkyl-substituted phenol is bis(hydroxynonyl)methane.

4. A polyol resin as set forth in claim 1, wherein the alkyl-substituted phenol is bis(hydroxyoctyl)methane.

5. A polyol resin as set forth in claim 1, wherein the bisphenol type epoxy resin is an epoxy resin represented by the following formula:

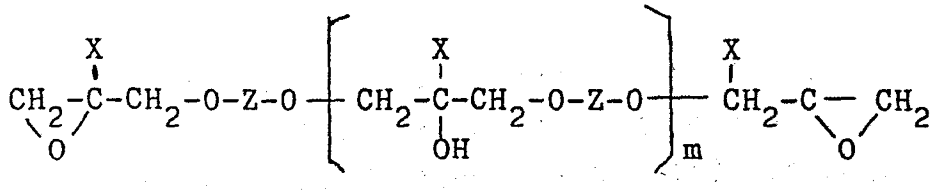

... (II)

wherein X stands for a hydrogen atom or a methyl group, Z stands for (i) a group represented by the following formula:

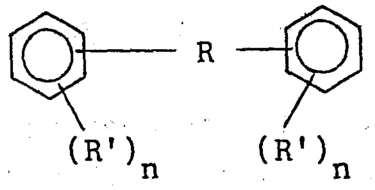

(III)

wherein R stands for a group $-CH_2-$, $-CHCH_3$, $-C(CH_3)_2-$, 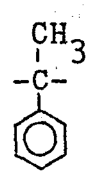 or 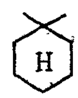, R' stands for an alkyl group having at least 4 carbon atoms, and n is a number of 1 or 2, or (ii) a combination of a group represented by the above-mentioned formula (III) and a group represented by the following formula:

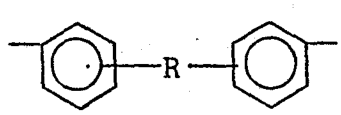

(IV)

wherein R is as defined above, and m is an integer of from 0 to 15.

6. A polyol resin as set forth in claim 1, wherein the active hydrogen-containing compound is an alkanolamine having 2 to 20 carbon atoms.

7. A polyol resin as set forth in claim 6, wherein the alkanolamine is diethanolamine.

8. A polyol resin as set forth in claim 1, wherein the active hydrogen-containing compound is a phenol having 6 to 30 carbon atoms.

9. A polyol resin as set forth in claim 1, wherein the polyol resin is obtained by reacting the components (a) and (b) in such amounts that the equivalent ratio of the active hydrogen of the component (b) to the epoxy group in the component (a) is from 0.95 to 1.05.

10. A polyol resin as set forth in claim 1, wherein the polyol resin has a number average molecular weight of 500 to 6000 and a hydroxyl value of 50 to 1000 mg-KOH/g.

11. A urethane type coating composition comprising (A) a polyol resin substantially free of an epoxy group, which comprises a reaction product between (a) a bisphenol type epoxy resin containing, as at least a part of the bisphenol component, an alkyl-substituted phenol represented by the following formula:

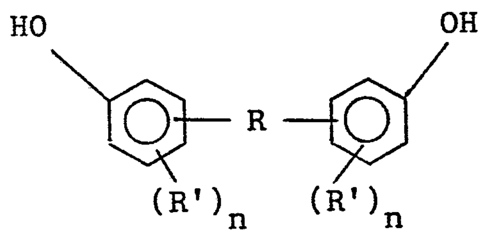

(I)

wherein R is a group $-CH_2-$, $-CHCH_3-$, $-C(CH_3)_2-$, 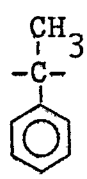 or 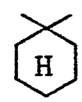, R' stands for an alkyl group having at least 4 carbon atoms, and n is a number of 1 or 2,

and (b) an active hydrogen-containing compound having a reactivity with an epoxy group, (B) a polyisocyanate or blocked polyisocyanate, and (C) an organic solvent comprising an aromatic hydrocarbon.

0287669

# INTERNATIONAL SEARCH REPORT

International Application No PCT/JP87/00736

**I. CLASSIFICATION OF SUBJECT MATTER** (if several classification symbols apply, indicate all) [3]

According to International Patent Classification (IPC) or to both National Classification and IPC

Int.Cl[4] C08G65/26, 18/48, 59/14

**II. FIELDS SEARCHED**

Minimum Documentation Searched [4]

| Classification System | Classification Symbols |
|---|---|
| IPC | C08G65/26, 18/48, 59/14 |

Documentation Searched other than Minimum Documentation to the Extent that such Documents are Included in the Fields Searched [5]

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| A | JP, B1, 45-8432 (Asahi Denka Kogyo Kabushiki Kaisha) 26 March 1970 (26. 03. 70) Claim (Family: none) | 1-10 |
| A | JP, A, 57-53528 (Texaco Development Corp.) 30 March 1982 (30. 03. 82) Claim & US, A, 4,316,991 & US, A, 4,373,034 & DE, A, 3,134,496 & FR, A, 2,489,341 | 1-11 |
| A | JP, A, 57-59928 (Texaco Development Corp.) 10 April 1982 (10. 04. 82) Claim & US, A, 4,309,532 & US, A, 4,394,463 & DE, A, 3,134,492 & FR, A, 2,489,340 | 1-11 |
| A | JP, A, 57-76027 (Texaco Development Corp.) 12 May 1982 (12. 05. 82) | 1-11 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| December 10, 1987 (10.12.87) | December 21, 1987 (21.12.87) |
| **International Searching Authority** [1] | **Signature of Authorized Officer** [20] |
| Japanese Patent Office | |

International Application No PCT/JP87/00736

FURTHER INFORMATION CONTINUED FROM THE SECOND SHEET

Claim & US, A, 4,323,658
& DE, A, 3,134,493 & FR, A, 2,489,342

V.☐ OBSERVATIONS WHERE CERTAIN CLAIMS WERE FOUND UNSEARCHABLE [10]

This international search report has not been established in respect of certain claims under Article 17(2) (a) for the following reasons:

1.☐ Claim numbers............because they relate to subject matter [12] not required to be searched by this Authority, namely:

2.☐ Claim numbers............because they relate to parts of the international application that do not comply with the prescribed requirements to such an extent that no meaningful international search can be carried out [13], specifically:

VI.☐ OBSERVATIONS WHERE UNITY OF INVENTION IS LACKING [11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.